# EUROPEAN PATENT SPECIFICATION

(11) **EP 2 224 190 B1**
(45) Date of publication and mention of the grant of the patent: **06.11.2019**
(21) Application number: 08851179.5
(22) Date of filing: 20.11.2008
(51) Int. Cl.: F25B 39/02, B01D 46/10, F25B 19/00, F25B 43/00, B01D 46/12

(54) **EVAPORATOR AND COOLING DEVICE**
VERDAMPFER UND KÜHLVORRICHTUNG
EVAPORATEUR ET DISPOSITIF DE REFROIDISSEMENT

(30) Priority: 21.11.2007 JP 2007302097
(43) Date of publication of application: 01.09.2010
(73) Proprietor: Tokyo Electric Power Company Holdings, Incorporated, Tokyo 100-8560 (JP); Chubu Electric Power Co., Inc., Nagoya-shi Aichi-ken 461-8680 (JP); The Kansai Electric Power Co., Inc., Kita-ku Osaka-shi Osaka 530-8270 (JP); Kabushiki Kaisha Kobe Seiko Sho, Chuo-ku Kobe-shi Hyogo 651-8585 (JP); Danish Technological Institute, 2630 Taastrup (DK); Johnson Controls Denmark ApS, 8270 Højbjerg (DK)
(72) Inventor: OKADA, Kazuto, Nishi-ku, Kobe-shi, Hyogo 651-2271 (JP); Fujisawa, Ryo, Nishi-ku, Kobe-shi, Hyogo 651-2271 (JP); TOSHIMA, Masatake, Nishi-ku, Kobe-shi, Hyogo 651-2271 (JP); NAKAYAMA, Yoshihiro, Hyogo 676-8670 (JP); IDE, Satoshi, Hyogo 676-8670 (JP); IIZUKA, Koichiro, Hyogo 676-8670 (JP); SUTO, Kunihiko, Chiyoda-ku, Tokio 100-8560 (JP); KURASHIGE, Kazutaka, Chiyoda-ku, Tokio 100-8560 (JP); SAKURABA, Ichirou, Nagoya-shi, Aichi 459-8522 (JP); HAYASHI, Daisuke, Nagoya-shi, Aichi 459-8522 (JP); SHATO, Shinji, Amagasaki-shi, Hyogo 661-0974 (JP); IKEUCHI, Masaki, Amagasaki-shi, Hyogo 661-0974 (JP); MADSBOLL, Hans, Taastrup DK2630 (DK); ANDREASEN, Marcin Blazniak, Taastrup DK2630 (DK); SVARREGAARD-JENSEN, Christian, Hojbjerg DK8270 (DK)
(74) Representative: TBK
(86) International application number: PCT/JP2008/071145
(87) International publication number: WO 2009/066736

(56) References cited:
- JP-A- 5 064 703
- JP-A- 57 055 304
- JP-A- 60 034 715
- JP-A- 62 180 790
- JP-T- 2003 534 519
- JP-U- 55 002 416
- JP-U- 63 164 915
- US-A- 2 384 413

## Description

### Technical Field

The present invention relates to an evaporator and a cooling device comprising the same.

### Background Art

Various kinds of conventional cooling devices such as refrigerators and ice makers for generating cold water and ice have been known (ex. refer to JP 2003-534519 A). In such cooling devices, an evaporator leads to a condenser via a compressor. In the evaporator, water is generated in a droplet or misty state as a refrigerant. Pressure in the evaporator is reduced by a suction effect of the compressor, so that part of the droplet or misty refrigerant is evaporated. The refrigerant is cooled down by evaporation heat obtained at this time. Evaporated refrigerant vapor is sucked out and compressed by the compressor. The compressed refrigerant vapor is sent to the condenser and condensed in the condenser.

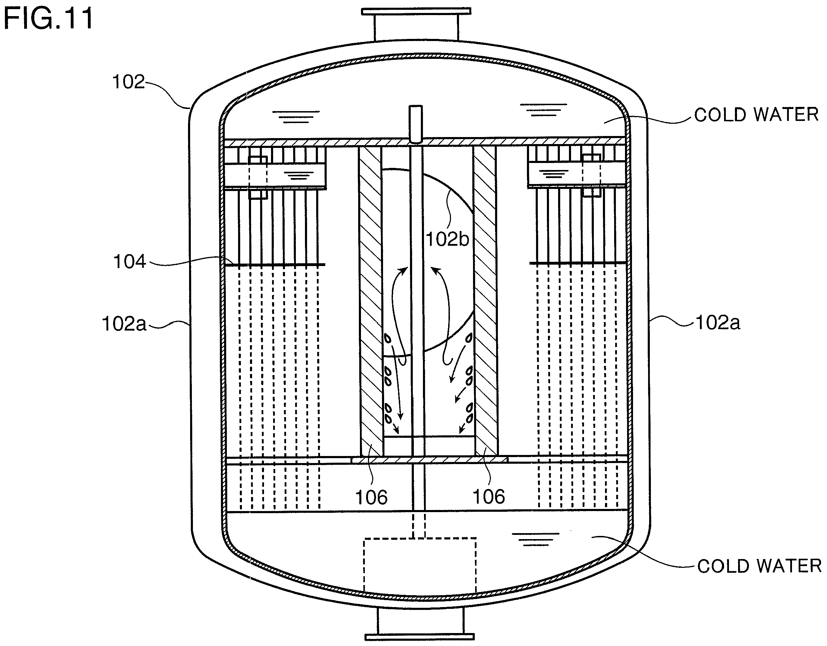

Fig. 11 shows an example of a conventional evaporator applied to a cooling device as stated above. This evaporator is provided with a suction port 102b leading to a suction portion of a compressor in a side wall portion 102a of a housing 102. In the housing 102, a refrigerant is shed from upward in a shower form at a position apart from the suction port 102b, and the shower of the refrigerant is made into droplets through a mesh member 104 provided in the midway. Filters 106 are vertically erected so as to divide a space in the housing 102 into a space for shedding a refrigerant and a space for communicating with the suction port 102b. The filters 106 transmit refrigerant vapor therethrough, and capture a droplet or misty refrigerant which is made to flow downward. Therefore, refrigerant vapor is exclusively transmitted through the filters 106 and sucked out from the suction port 102b in response to suction by the compressor.

In the above conventional evaporator, there are cases that a refrigerant captured by the filters 106 flows down along surfaces of the filters 106 facing to the suction port 102b, and splashes are generated by scattering of the refrigerant flowing down. In this case, refrigerant droplets flowing down along the surfaces of the filters 106 and splashes of the refrigerant are occasionally sucked out from the suction port 102b due to a suction force of the compressor. Droplets or splashes thus sucked out collide with a moving blade of the compressor, causing damages to the moving blade. Therefore, a problem arises with shortened service life of the compressor.

US 2 384 413 A shows an evaporator comprising a housing having a suction port connectable to a suction portion of a compressor in order to evaporate at least part of a droplet or misty working fluid in the housing by a suction effect of the compressor through the suction port, the housing being configured by a side wall portion provided with the suction port, a top wall portion and a bottom wall portion, wherein a top plate and a bottom plate are provided in the housing, a first storage space temporarily storing working fluid is configured between the top plate and the top wall portion, and a filter installed between the top plate and the bottom plate in the housing, the filter dividing a space in the housing into a first space for generating the droplet or misty working fluid and a second space for communicating with the suction port, the filter being inclined away from the suction port as advancing upward, the filter transmitting therethrough vapor resulting from evaporation of the droplet or misty working fluid while capturing the droplet or misty working fluid, wherein a second storage space is configured between the bottom plate and the bottom wall portion to temporarily store working fluid shed from the first storage space. US 2 384 413 A discloses an evaporator according to the preamble of claim 1.

### Summary of the Invention

It is the object of the present invention to provide an evaporator having an improved structure for extending its service life.

The object of the present invention is achieved by an evaporator having the features of claim 1.
Further advantageous developments of the present invention are defined in the dependent claims. A cooling device comprising the evaporator according to the present invention is defined in claim 7.

### Brief Description of the Drawings

Fig. 1 is a fluid circuit diagram of a cooling device according to a first embodiment of the present invention;
Fig. 2 is a side view of an evaporator according to the first embodiment for being applied to the cooling device shown in Fig. 1;
Fig. 3 is a transverse cross sectional diagram along a line from III to III of the evaporator shown in Fig. 2;
Fig. 4 is a longitudinal cross sectional diagram of the evaporator along a line from IV to IV of Fig. 3;
Fig. 5 is a diagram showing a state of setting a filter in the evaporator shown in Fig. 2;
Fig. 6 is a longitudinal cross sectional diagram of an evaporator according to a second embodiment of the present invention;
Fig. 7 is a diagram showing a state of setting a filter in the evaporator shown in Fig. 6;
Fig. 8 is a diagram showing a state of setting a filter in an evaporator according to a third embodiment of the present invention;
Fig. 9 is a front view obtained by seeing filters in an evaporator according to a fourth embodiment of the present invention from a generation space to a communication space;
Fig. 10 is a diagram showing a state of setting a filter in an evaporator according to a modified example of the third embodiment of the present invention; and
Fig. 11 is a longitudinal cross sectional diagram of a conventional evaporator applied to a cooling device.

### Best Mode for Carrying Out the Invention

Embodiments of the present invention will be explained below referring to the drawings.

### (First Embodiment)

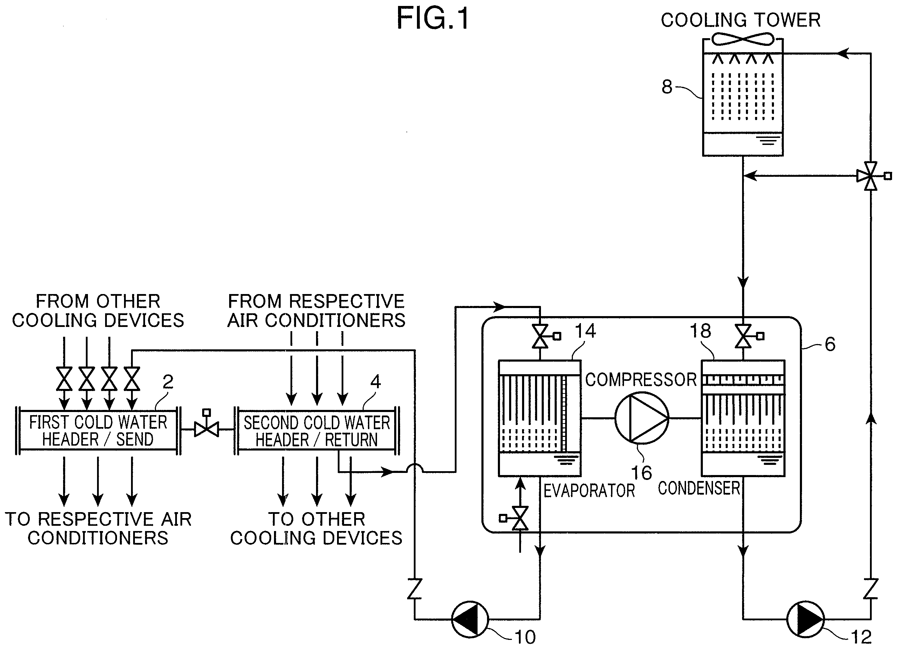

First, an entire configuration of a cooling device according to a first embodiment will be explained referring to Fig. 1.

The cooling device according to the first embodiment is used by being connected to an air conditioner, where cold water heated up by heat exchange in the air conditioner is cooled down and supplied to the air conditioner again. The cooling device is provided with a first cold water header 2, second cold water header 4, cooling device main body 6, cooling tower 8, first pump 10, and second pump 12.

The first cold water header 2 receives cold water sent from other cooling devices not shown and cold water sent from the cooling device main body 6 so as to supply the cold water to air conditioners not shown. This cold water is included in the concept of a working fluid in the present invention.

The second cold water header 4 receives cold water returned from the air conditioners not shown so as to supply the cold water to the other cooling devices not shown and the cooling device main body 6.

The cooling device main body 6 has a function to cool down cold water returned from the air conditioners so as to supply to the air conditioners again. The cooling device main body 6 has an evaporator 14, a compressor 16, and a condenser 18.

Cold water sent from the second cold water header 4 is introduced to the evaporator 14. The evaporator 14 evaporates part of cold water as will be described later in order to cool down the cold water by the evaporation heat. That is, cold water also plays a role of a refrigerant. The first pump 10 is connected to the evaporator 14, where cold water which was cooled down is supplied from the evaporator 14 to the first cold water header 2 by driving the first pump 10.

The compressor 16 is connected between the evaporator 14 and the condenser 18. To be more specific, the evaporator 14 is connected to a suction portion of the compressor 16, while the condenser 18 is connected to a discharge portion of the compressor 16. The compressor 16 has a moving blade and a stationary blade not shown, where refrigerant vapor evaporated in the evaporator 14 is sucked by driving the moving blade. The compressor 16 compresses sucked refrigerant vapor so as to send to the condenser 18.

The condenser 18 cools down refrigerant vapor sent from the compressor 16 by using cooling water in order to condense the refrigerant vapor. The condenser 18 is a heat exchanger of a direct heat exchange system, where the refrigerant vapor introduced into the condenser 18 is condensed into cooling water so as to recharge water. Cooling water circulates around the condenser 18, the second pump 12 and the cooling tower 8. That is, cooling water which was heated up by condensing the refrigerant vapor in the condenser 18 is sent from the condenser 18 to the cooling tower 8 by driving the second pump 12. The cooling tower 8 cools down received cooling water which is returned to low temperatures and supplies the cooling water to the condenser 18. The condenser 18 condenses the refrigerant vapor by cooling water returned from the cooing tower 8. A series of these processes are repeated in the condenser 18, the second pump 12 and the cooling tower 8.

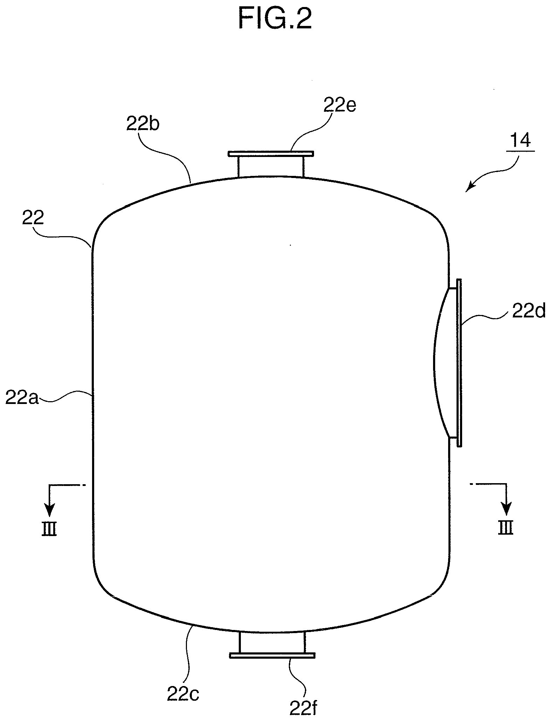

A detailed configuration of the evaporator 14 according to the first embodiment will be explained referring to Figs.2 to 5.

The evaporator 14 according to the first embodiment evaporates part of cold water in order to cool down the cold water by the evaporation heat as stated above, where the cold water also plays a role of a refrigerant. The evaporator 14 has a housing 22 as show in Fig. 2. The housing 22 is configured by a side wall portion 22a of a cylindrical form having an axial center extending in the vertical direction, a top wall portion 22b for covering an opening in an upper end of the side wall portion 22a, and a bottom wall portion 22c for covering an opening in a lower end of the side wall portion 22a.

The side wall portion 22a is provided with a circular suction port 22d. The suction port 22d is connected to the suction portion of the compressor 16 (refer to Fig. 1). Refrigerant vapor is sucked out from the housing 22 to the suction portion of the compressor 16 through the suction port 22d. Pressure in the housing 22 is also reduced by a suction effect of the compressor 16 through the suction port 22d.

The top wall portion 22b is provided with an introduction port 22e. The introduction port 22e leads to the second cold water header 4 (refer to Fig. 1). Therefore, cold water returned from the air conditioners is introduced into the housing 22 through the introduction port 22e.

The bottom wall portion 22c is provided with an exhaust port 22f. The exhaust port 22f leads to the first pump 10 (refer to Fig. 1). Therefore, cold water cooled down in the housing 22 is exhausted through the exhaust port 22f, and sent to the first cold water header 2 by the first pump 10.

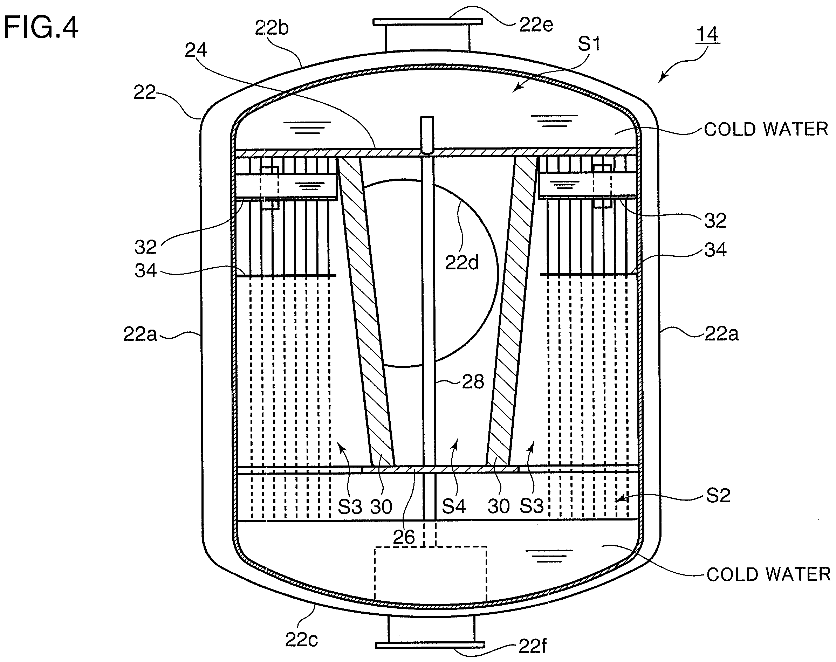

In the housing 22, a top plate 24, bottom plate 26, reinforcing member 28, filters 30, 30, porous plates 32, 32, and mesh members 34, 34 are provided as shown in Fig. 4.

The top plate 24 defines an upper space in the housing 22. Accordingly, a first storage space S1 is configured in order to temporarily store cold water introduced through the introduction port 22e. To be more specific, the top plate 24 is arranged horizontally with a predetermined gap to the top wall portion 22b in an upper space in the housing 22. The first storage space S1 is configured between an upper surface of the top plate 24 and a lower surface of the top wall portion 22b. In the top plate 24, a number of vertically penetrated through holes is provided in a portion corresponding to a pair of generation spaces S3 which will be described later. Cold water in the first storage space S1 is shed in a shower form through the through holes.

The bottom plate 26 partially and vertically defines a lower space in the housing 22. Accordingly, a second storage space S2 is configured in order to temporarily store cold water which was shed from the first storage space S1 and cooled down. To be more specific, the bottom plate 26 is arranged horizontally with a predetermined gap to the bottom wall portion 22c in a lower space in the housing 22. The second storage space S2 is configured between a lower surface of the bottom plate 26 and an upper surface of the bottom wall portion 22c. The bottom plate 26 is formed in a substantially fan shape, and arranged in the housing 22 so that regions through which cold water shed from the first storage space S1 passes are left on both ends of the bottom plate while shielding other regions. That is, the cold water is shed in the second storage space S2 by passing through the spaces on both ends which are not shielded by the bottom plate 26.

The reinforcing member 28 is arranged so as to extend in the vertical direction at a position corresponding to the axial center of the housing 22. The reinforcing member 28 couples the top plate 24 and the bottom plate 26, and reinforces the top plate 24 and the bottom plate 26.

The pair of the filters 30,30 is arranged between the top plate 24 and the bottom plate 26, separating the generation spaces S3 for generating a droplet or misty refrigerant (or cold water) from a communication space S4 for communicating with the suction port 22d. That is, the generation spaces S3 are configured between the respective filters 30 and internal surfaces of the side wall 22a of the housing 22, while the communication space S4 is configured between the both filters 30,30. The generation spaces S3 are included in the concept of the first space in the present invention. The communication space S4 is also included in the concept of the second space in the present invention. The filters 30 transmit vapor resulting from evaporation of a droplet or misty refrigerant (or cold water) generated in the generation spaces S3, while capturing a droplet or misty refrigerant (or cold water) so as to prevent transmission thereof.

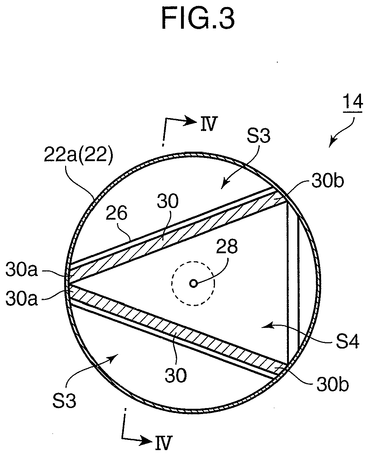

To be more specific, the filters 30 are made of a material formed of interlaced mesh-like fibers in a mat shape or other materials. The filters 30 are loaded by being erected on an upper surface of the bottom plate 26, and upper end portions of the filters 30 are connected to a lower surface of the top plate 24. Both of the filters 30,30 are arranged in contrast in left and right ends by using the axial center of the suction port 22d as a center. Each of the filters 30 is arranged obliquely to the axial center of the suction port 22d so that a distance from a first end portion 30a (refer to Fig. 3) to the suction port 22d is longer than a distance from a second end portion 30b (refer to Fig. 3) to the suction port 22d in a width direction of the filter.

Each of the generation spaces S3 is provided with the porous plate 32 and the mesh member 34. The porous plates 32 are arranged horizontally below the top plate 24 with an interval. The mesh members 34 are arranged horizontally below the porous plates 32 with an interval. A refrigerant (or cold water) to be shed through the through holes of the porous plates 3 is shed in finer droplets through the mesh of the mesh members 34. At this time, a refrigerant (or cold water) occasionally becomes finer in the form of mist. Pressure in the housing 22 is reduced by a suction effect of the compressor 16, so that part of droplet or misty cold water is evaporated in the generation spaces S3. Refrigerant vapor generated by this evaporation is sucked out from the generation spaces S3 to the communication space S4 by being transmitted through the filters 30, and sucked out into the suction portion of the compressor 16 through the suction port 22d.

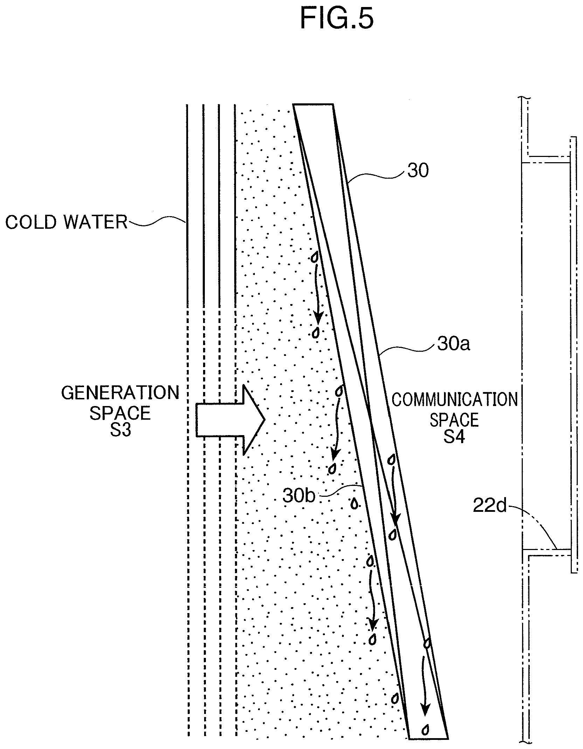

In the first embodiment, the filters 30 are inclined away from the suction port 22d as advancing upward as shown in Figs. 4 and 5. That is, the filters 30 are inclined by a predetermined angle from a vertically erected state in a direction that upper end portions of the filters 30 approach the side wall portion 22a of the housing 22 by which the generation spaces S3 are surrounded.

Operation when cold water is cooled down in the evaporator 14 of the first embodiment will be explained.

Cold water which was heated up by heat exchange in the air conditioners and returned to the evaporator 14 is introduced into the first storage space S1 from the introduction port 22e of the housing 22. The introduced cold water is stored in the first storage space S1 and shed in a shower form in both of the generation spaces S3, S3 through the through holes of the top plate 24. The cold water shed in a shower form is shed through mesh of the mesh members 34 in a finer, droplet form. At this time, cold water occasionally turns into a mist form which is finer than droplets.

Pressure in the housing 22 is reduced by a suction effect of the compressor 16 through the suction port 22d. Therefore, part of the droplet or misty cold water is evaporated and turns into refrigerant vapor. Cold water is cooled down by evaporation heat obtained at this time. Refrigerant vapor generated in the generation spaces S3 is transmitted through the filters 30 by a suction effect of the compressor 16, and sucked out through the suction port 22d. Meanwhile, part of droplet or misty cold water in the generation spaces S3 is also sucked toward the suction port 22d, but the filters 30 capture such droplet or misty cold water and prevent transmission thereof, so that the droplet or misty cold water is not sucked out to the suction port of the compressor 16.

A plurality of cold water particles captured by the filters 30 are united and increased, followed by flowing downward by gravity. At this time, cold water captured by the filter 30 is entirely shed on the generation spaces S3 side rather than the surfaces 30a of the filters 30 facing to the communication space S4 as shown in Fig. 5 because the filters 30 are inclined away from the suction port 22d as advancing upward. To be more specific, almost all cold water captured by the filters 30 flows downward so as to be shed in the generation spaces S3 from the surfaces 30b of the filters 30 facing to the generation spaces S3. However, cold water captured in a lower portion of the filters 30 flows down by being transmitted through lower end surfaces of the filters 30 without reaching the surfaces 30b facing to the generation spaces S3 even if it flows downward.

The droplet or misty cold water which was shed in the generation spaces S3, and cold water which was captured by the filters 30 and flowing downward, are made to flow into the second storage space S2. In the second storage space S2, cold water flowing thereinto is stored and the cold water is exhausted to the outside through the exhaust port 22f. The cold water is sent to the first cold water header 2 by the first pump 10, followed by being supplied to the respective air conditioners from the first cold water header 2. Operation to cool down cold water is thus carried out in the evaporator 14.

As explained above, the filters 30 for dividing the generation spaces S3 for generating droplet or misty cold water and the communication space S4 for communicating with the suction port 22d are inclined away from the suction port 22d as advancing upward in the housing 22 in the first embodiment. Therefore, cold water captured by the filters 30 is entirely shed on the generation spaces S3 side rather than the surfaces 30a of the filters 30 facing to the suction port 22d. Accordingly, it is made possible to prevent shedding of cold water droplets from the filters 30 to the communication space S4, and splashes generated by shedding of the droplets, so that sucking out such droplets and splashes from the suction port 22d to the suction portion of the compressor 16 can be prevented. As a result, it is made possible to prevent the moving blade of the compressor 16 from being damaged due to collision with the droplets and splashes, which allows service life of the compressor to be extended.

### (Second Embodiment)

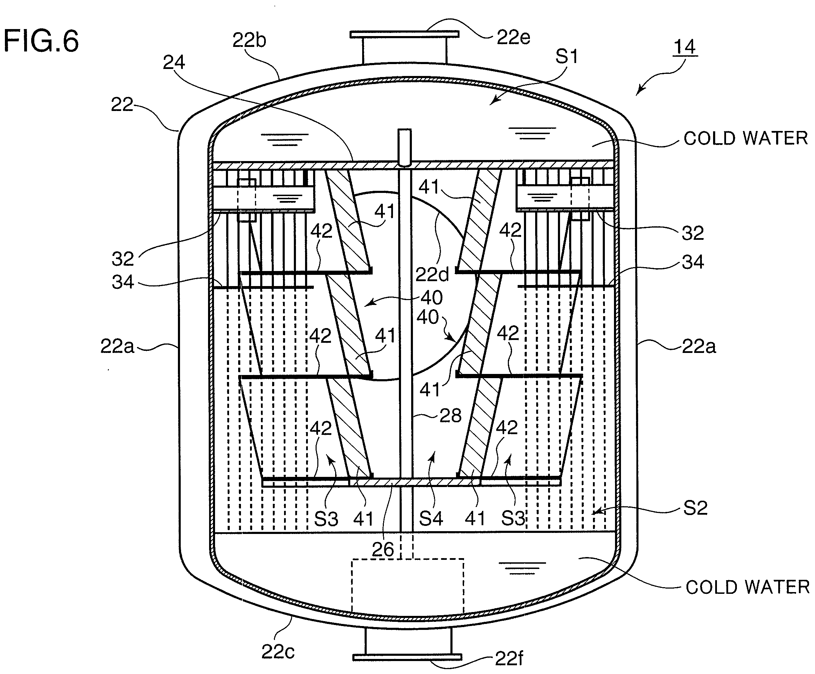

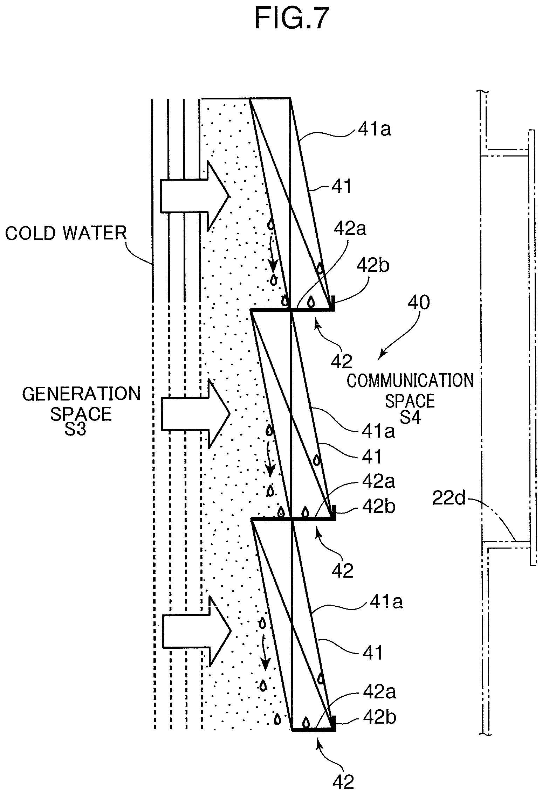

A configuration of the evaporator 14 according to a second embodiment of the present invention will be described referring to Figs. 6 and 7.

In the second embodiment, each of the filters 40 arranged in the housing 22 is divided into a plurality of filters, which differs from the first embodiment. To be more specific, each of the filters 40 is divided into a plurality (three in this embodiment) of filter members 41 arranged in the vertical direction as shown in Figs. 6 and 7. Each of the filter members 41 is inclined away from the suction port 22d as advancing upward at a substantially equivalent angle. That is, each of the filter members 41 is inclined by a predetermined angle from a vertically erected state in a direction that an upper end portion of the filter member approaches the side wall portion 22a of the housing 22 by which the generation spaces S3 are surrounded. Each of the filter members 41 is inclined at an angle which allows a position of a corner portion facing to the communication space S4 in an upper end portion of the filter member to be substantially consistent with a position of a corner portion facing to the generation space S3 in a lower end portion of the filter member in the horizontal direction. Each of the filter members 41 is vertically arranged so that a horizontally directed position of a corner portion facing to the generation space S3 in a lower end portion of the filter member 41 is substantially consistent with a horizontally directed position of a corner portion facing to the communication space S4 in an upper end portion of the other filter member 41 positioned below the filter member 41. Each of the filter members 41 may be inclined at a larger angle than the above predetermined angle toward the generation space S3 side. In this case, an interval may be provided between the horizontally directed position of the corner portion facing to the generation space S3 in the lower end portion of the filter member 41 and the horizontally directed position of the corner portion facing to the communication space S4 in the upper end portion of the other filter member 41 positioned below the filter member 41.

Cold water receiving members 42 are arranged between the filter members 41, 41 disposed adjacently in the vertical direction. The cold water receiving members 42 receive cold water captured by the filter members 41 and flowing downward, while permitting the cold water to flow into the generation spaces S3. Each of the cold water receiving members 42 has a receiving plate portion 42a and an erected portion 42b.

The receiving plate portion 42a is a member to receive cold water captured by the filter member 41 and flowing downward. The receiving plate portion 42a is made of a horizontally arranged plate, extending in a width direction of the filter member 41. The receiving plate portion 42a is arranged between a lower end surface of the predetermined filter member 41 and an upper end surface of the other filter member 41 positioned below the predetermined filter member 41. The receiving plate portion 42a covers an entire lower end surface of the predetermined filter member 41 by its upper surface, and covers an entire upper end surface of the other filter member 41 positioned below the predetermined filter member 41 by its lower surface. However, the receiving plate portion 42a of the cold water receiving members 42 disposed in a lowest position covers only a lower end surface of the filter member 41 loaded onto the receiving plate portion 42a.

The erected portion 42b prevents splashes of cold water received by the receiving plate portion 42a toward the suction port 22d, and shedding of cold water received by the receiving plate portion 42a from an end portion of the receiving plate portion 42a to the communication space S4. The erected portion 42b is erected on the receiving plate portion 42a at a position closer to the communication space S4 side (or the suction port 22d side) than the filter member 41 on the receiving plate portion 42a. To be more specific, the erected portion 42b is erected on an end portion of the receiving plate portion 42a on the communication space S4 side. The erected portion 42b extends in the longitudinal direction of the receiving plate portion 42a, being arranged across an entire range of the receiving plate portion 42a in the longitudinal direction.

Configuration other than the aforementioned configuration of the evaporator 14 according to the second embodiment is similar to that of the evaporator 14 according to the first embodiment.

Operation when cold water is cooled down in the evaporator 14 of the second embodiment will be described.

When cold water is cooled down in the evaporator 14 of the second embodiment, part of droplet or misty cold water generated in the generation spaces S3 is captured by each of the filter members 41. Cold water captured by each of the filter members 41 is entirely shed in the generation spaces S3 side rather than a surface 41a of each of the filter members 41 facing to the communication space S4 as shown in Fig. 7, because each of the filter members 41 is inclined away from the suction port 22d as advancing upward.

Cold water which was shed as stated above is received by the receiving plate portions 42a of the cold water receiving members 42. The erected portions 42b prevent the received cold water from splashing toward the suction port 22d or being shed in the communication spaces S4 due to a suction effect of the compressor 16. When cold water is saved on the receiving plate portions 42a to some extent, the cold water is shed from end portions of the receiving plate portions 42a on the generation spaces S3 side to the generation spaces S3 by overflowing.

Operation other than the aforementioned operation in cooling down cold water in the evaporator 14 according to the second embodiment is similar to that of the evaporator 14 according to the first embodiment.

As explained above, the respective filter members 41 to constitute the filters 40 are inclined away from the suction port 22d as advancing upward in the second embodiment. Therefore, cold water captured by each of the filter members 41 is entirely shed on the generation spaces S3 side rather than the surface 41a of the filter member 41 facing to the suction port 22d. Therefore, it is made possible to prevent shedding of cold water droplets from the filters 40 to the communication spaces S4, and splashes generated by shedding of the droplets, so that sucking out such droplets and splashes from the suction port 22d to the suction portion of the compressor 16 can be prevented. As a result, it is made possible to prevent the moving blade of the compressor 16 from being damaged due to collision with the droplets and splashes, which allows service life of the compressor to be extended.

Moreover, the filters 40 are divided into the plurality of the filter members 41 arranged in the vertical direction and each of the filter members 41 is inclined as stated above in the second embodiment, so that an area occupied by the entire filters 40 in the horizontal direction can be reduced in comparison with the case where one undivided filter is inclined at the same angle with each of the filter members 41. Therefore, enlargement of the evaporator 14 can be suppressed in the horizontal direction. In other words, each of the filter members 41 in the second embodiment can be inclined larger than the filters 30 of the first embodiment. Accordingly, it is possible to make cold water captured by the filter 40 more difficult to flow into the communication spaces S4.

Furthermore, the second embodiment is provided with the cold water receiving members 42 having the receiving plate portions 42a for receiving cold water captured by the respective filter members 41 and flowing downward, and the erected portions 42b erected on the receiving plate portions 42a at a position closer to the suction port 22d side (or the communication space S4 side) than the filter members 41 arranged on the receiving plate portions 42a. Therefore, cold water captured by the filter members 41 and flowing downward is received by the receiving plate portions 42a, where the received cold water can be prevented from splashing toward the suction port 22d and being shed in the communication spaces S4 by the erected portions 42b. Therefore, cold water received by the receiving plate portions 42a is shed from end portions of the receiving plate portions 42a on the generation spaces S3 side to the generation spaces S3 by overflowing. Cold water shed into the generation spaces S3 is not sucked out from the suction port 22d by being shielded in the filter members 41 even if it is sucked by the compressor 16. Therefore, it is made possible to prevent the moving blade of the compressor 16 from being damaged due to collision caused by sucking out cold water captured by the filter members 41 and flowing downward.

### (Third Embodiment)

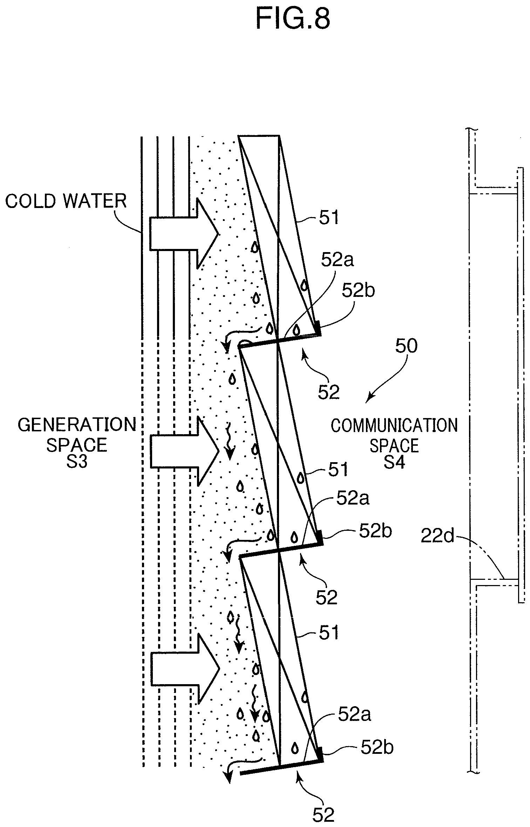

A configuration of the evaporator 14 according to a third embodiment of the present invention will be explained referring to Fig. 8.

In the third embodiment, receiving plate portions 52a of cold water receiving members 52 are inclined downward from the communication space S4 to the generation spaces S3 in its width direction (i.e. passing direction of refrigerant vapor resulting from evaporation of cold water), which differs from the second embodiment. To be more specific, each of filters 50 is divided into a plurality (three in this embodiment) of filter members 51 arranged in the vertical direction. An upper end surface and a lower end surface of each of the filter members 51 are inclined downward from the communication space S4 to the generation space S3. The receiving plate portions 52a of the cold water receiving members 52 are also inclined downward from the communication space S4 to the generation spaces S3 in a width direction thereof. That is, the upper end surface and the lower end surface of each of the filter members 51 and each of the receiving plate portions 52a are arranged so as to be higher on the communication space S4 side and lower on the generation space S3 side. Therefore, cold water captured by the filter members 51 and flowing downward is received by the receiving plate portions 52a and shed in the generation spaces S3 by flowing down along the inclination of the receiving plate portions 52a.

Erected portions 52b are also erected on end portions of the receiving plate portions 52a on the communication space S4 side (or the suction port 22d side). The erected portions 52b have a function similar to that of the erected portions 42b according to the second embodiment.

Configuration and operation other than the aforementioned configuration and operation of the evaporator 14 according to the third embodiment are similar to those of the evaporator 14 according to the second embodiment.

As explained above, the receiving plate portions 52a are inclined downward from the communication space S4 to the generation spaces S3 in the third embodiment, so that cold water captured by the filter members 51 and flowing downward can be received by the receiving plate portions 52a and the cold water can be made to flow into the generation spaces S3. Therefore, cold water captured by the filter members 51 and flowing downward can be prevented from being sucked out by the compressor 16 more certainly.

Effects other than the aforementioned effects of the third embodiment are similar to those of the second embodiment.

### (Fourth Embodiment)

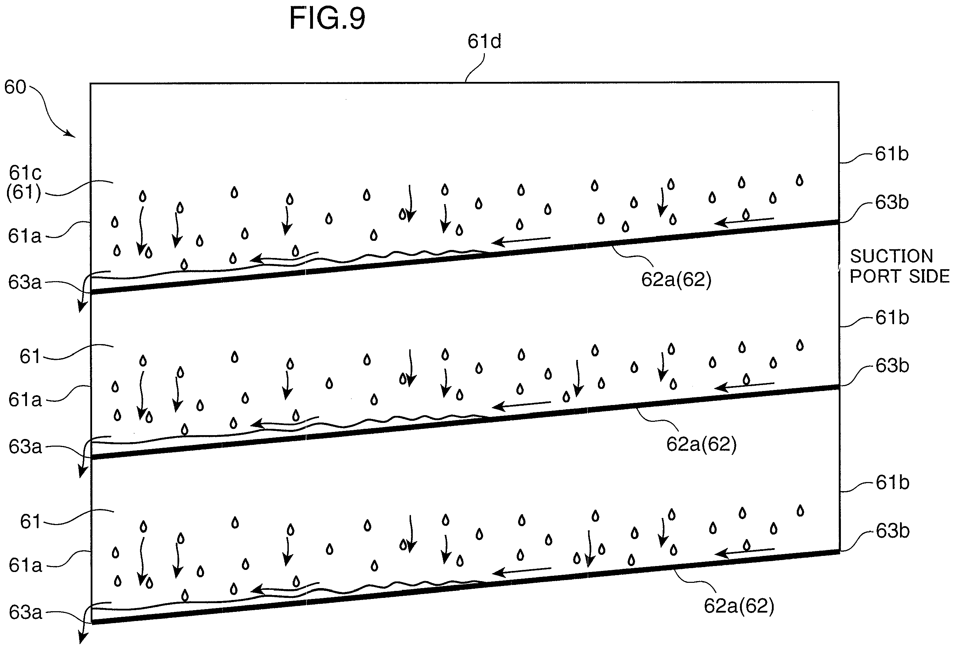

A configuration of the evaporator 14 according to a fourth embodiment of the present invention will be explained referring to Fig. 9.

In the fourth embodiment, receiving plate portions 62a are inclined in the longitudinal direction, which differs from the second embodiment. To be more specific, filters 60 according to the fourth embodiment are divided into a plurality of filter members 61 arranged in the vertical direction. Each of the filter members 61 has a first end portion 61a which is one of end portions in the width direction, and a second end portion 61b which is the other end portion in the width direction. Each of the filter members 61 is arranged obliquely to the axial center of the suction port 22d so that the second end portion 61b is disposed closer to the suction port 22d than the first end portion 61a. The receiving plate portions 62a of each of cold water receiving members 62 has a first end portion 63a which is one of end portions in the longitudinal direction, and a second end portion 63b which is the other end portion in the longitudinal direction. Each of the receiving plate portions 62a is arranged obliquely to the axial center of the suction port 22d so that the second end portion 63b is disposed closer to the suction port 22d than the first end portion 63a.

An upper end surface and a lower end surface of each of the filter members 61 are inclined downward as advancing from the second end portion 61b to the first end portion 61a. However, an upper end surface 61d of the filter member 61c disposed in a highest position is arrange horizontally. The receiving plate portions 62a are inclined downward as advancing from the second end portions 63b to the first end portions 63a. Therefore, cold water captured by the filter members 61 and flowing downward is received by the receiving plate portions 62a and shed from the first end portions 63a by flowing down in a direction away from the suction port 22d along the inclination of the receiving plate portions 62a.

Configuration and operation other than the aforementioned configuration and operation of the evaporator 14 according to the fourth embodiment are similar to those of the evaporator 14 according to the second embodiment.

As explained above, the receiving plate portions 62a are inclined downward as advancing to the opposite first end portions 63a from the second end portions 63b disposed closer to the suction port 22d in the fourth embodiment. Therefore, cold water received by the receiving plate portions 62a can be shed from the first end portions 63a being end portions away from the suction port 22d. That is, a position to shed cold water from the receiving plate portions 62a can be set to be away from the suction port 22d, so that cold water shed from the receiving plate portions 62a can be more certainly prevented from being sucked out by the compressor 16 in comparison with the case where cold water is shed from the receiving plate portions 62a at a position closer to the suction port 22d.

Effects other than the aforementioned effects of the fourth embodiment are similar to those of the second embodiment.

The embodiments disclosed here should be considered as being entirely exemplary and unlimited, i.e. they may be modified within the scope of the present invention as defined by the appended claims.

For example, the receiving plate portions 62a horizontally disposed in the width direction are inclined in the longitudinal direction in the fourth embodiment, but it is not limited and the receiving plate portions 62a of the fourth embodiment inclined in the longitudinal direction may be further inclined in the width direction in the same manner with the third embodiment.

Moreover, the erected portions 52b are provided in the cold water receiving members 52 in the third embodiment, but the erected portions 52b may be omitted. That is, when the receiving plate portions 52a are inclined downward from the communication space S4 to the generation spaces S3 as shown in the third embodiment, cold water received by the receiving plate portions 52a flows into the generation spaces S3, so that it is possible to prevent cold water received by the receiving plate portions 52a from splashing toward the suction port 22d and being shed in the communication space S4 without providing the erected portions 52b. Therefore, the erected portions 52b can be omitted in the third embodiment.

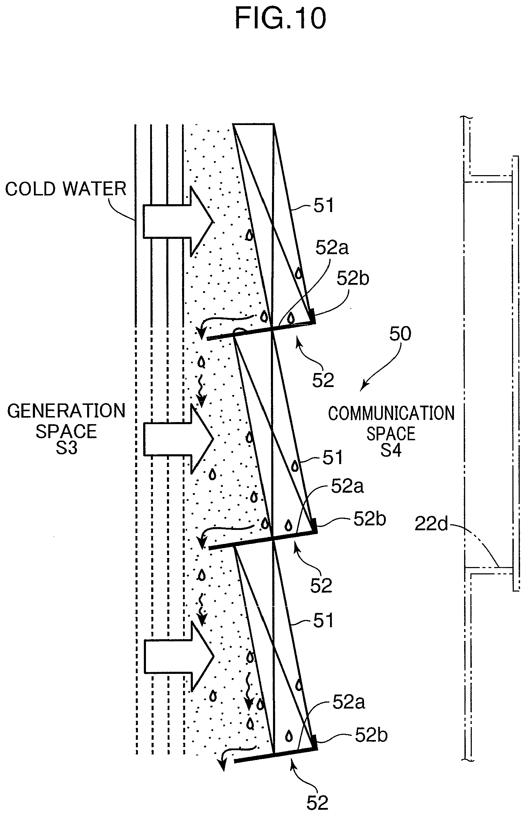

The receiving plate portions 52a of the cold water receiving members 52 may be configured to extend over the edge of upper end surfaces of the filter members 51 on the generation spaces S3 side as shown in a modified example of the third embodiment of Fig. 10. According to this configuration, cold water droplets flowing down from the receiving plate portions 52a can be prevented from being attached to the filter members 51 disposed directly below the receiving plate portions 52a.

Configuration of the cold water receiving members is not limited to the configuration shown in each of the above embodiments. For example, the cold water receiving members may be configured in a shape of a box container into which a lower portion of the filter member is inserted. In this case, a bottom portion of the container is included in the concept of the receiving plate portion in the present invention, and a side wall portion of the container facing to the communication space S4 (or the suction port 22d) is included in the concept of the erected portion in the present invention. Exhaust holes for permitting cold water to flow into the generation spaces S3 is provided in a lower portion of such a container, so that cold water captured by the filter members and flowing downward can be received by the container and made to flow into the generation spaces S3.

Moreover, configuration of the filters is not limited to the configuration shown in each of the above embodiments. For example, it is possible to similarly apply the present invention to the case where a filter has a curved horizontal cross section so as to be swelled on the generation space S3 side and the case where four filters are arranged to exhibit a W shape in a horizontal cross section and other cases.

Furthermore, a device to which the evaporator 14 is applied is not limited to the cooling device as explained in the first embodiment.

### (Outline of the Present Embodiments)

The present embodiments are summarized as follows.

The evaporator according to the present embodiments is provided with the housing having the suction port connectable to the suction portion of the compressor in order to evaporate at least part of a droplet or misty working fluid in the housing by a suction effect of the compressor through the suction port. The evaporator comprises a filter installed in the housing, the filter dividing a space in the housing into the first space for generating the droplet or misty working fluid and the second space for communicating with the suction port, the filter being inclined away from the suction port as advancing upward, and the filter transmitting therethrough vapor resulting from evaporation of the droplet or misty fluid while capturing the droplet or misty working fluid.

In this evaporator, the filter for dividing a space in the housing into the first space for generating the droplet or misty working fluid and the second space for communicating with the suction port is inclined away from the suction port as advancing upward. Therefore, a working fluid captured by the filter is entirely shed on the first space side rather than the surface facing to the suction port of the filter. Accordingly, it is made possible to prevent shedding of working fluid droplets from the filter to the second space for communicating with the suction port, and splashes generated by shedding of the droplets, so that sucking out such droplets and splashes from the suction port to the suction portion of the compressor can be prevented. As a result, it is made possible to prevent the moving blade of the compressor from being damaged due to collision with the droplets and splashes, which allows service life of the compressor to be extended.

Moreover, the evaporator according to the present embodiments is provided with the housing having the suction port connectable to the suction portion of the compressor in order to evaporate at least part of a droplet or misty working fluid in the housing by a suction effect of the compressor through the suction port. The evaporator comprises a filter installed in the housing, the filter dividing a space in the housing into the first space for generating the droplet or misty working fluid and the second space for communicating with the suction port, the filter transmitting therethrough vapor resulting from evaporation of the droplet or misty working fluid while capturing the droplet or misty working fluid. The filter is divided into the plurality of the filter members disposed in the vertical direction, and each of the filter members is inclined away from the suction port as advancing upward.

In this evaporator, each of the filter members to constitute the filter for dividing the first space for generating the droplet or misty working fluid and the second space for communicating with the suction port is inclined away from the suction port as advancing upward. Therefore, a working fluid captured by each of the filter members is entirely shed on the first space side rather than the surface of the filter member facing to the suction port. Accordingly, it is made possible to prevent shedding of working fluid droplets from the filter to the second space for communicating with the suction port, and splashes generated by shedding of the droplets, so that sucking out such droplets and splashes from the suction port to the suction portion of the compressor can be prevented. As a result, it is made possible to prevent the moving blade of the compressor from being damaged due to collision with the droplets and splashes, which allows service life of the compressor to be extended. Moreover, the filter is divided into the plurality of the filter members arranged in the vertical direction and each of the filter members is inclined as stated above in this evaporator, so that an area occupied by the entire filters in the horizontal direction can be decreased in comparison with the case where one undivided filter is inclined at the same angle with the each of the above filter members. Therefore, enlargement of the evaporator can be suppressed in the horizontal direction.

The evaporator having the filter which is divided into the plurality filter members preferably comprises the receiving plate portion arranged between two of the adjacent filter members disposed in the vertical direction, the receiving plate portion receiving the working fluid captured by the upper filter member thereof and flowing downward, and the erected portion erected on the receiving plate portion at a position closer to the suction port than the upper filter member. According to this configuration, a working fluid captured by the filter member and flowing downward can be received by the receiving plate portion, where the erected portion prevents the received working fluid from splashing toward the suction port and being shed in the second space. Therefore, a working fluid received by the receiving plate portion is shed from the end portion of the receiving plate portion on the first space side by overflowing. A working fluid shed in the first space is not sucked out from the suction port by being shielded in the filter member even if it is sucked by the compressor. As a result, it is made possible to prevent the moving blade of the compressor from being damaged due to collision caused by sucking out a working fluid captured by the filter member and flowing downward.

In this case, the receiving plate portion is preferably inclined downward from the second space to the first space. According to this configuration, a working fluid captured by the filter member and flowing downward can be received by the receiving plate portion, and the working fluid is allowed to flow into the first space. Therefore, a working fluid captured by the filter member and flowing downward can be prevented from being sucked out by the compressor more certainly in this configuration.

The evaporator having the filter which is divided into the plurality filter members preferably comprises the receiving plate portion arranged between two of the adjacent filter members disposed in the vertical direction, the receiving plate portion receiving the working fluid captured by the upper filter member thereof and flowing downward, wherein the receiving plate portion is inclined downward from the second space to the first space. According to this configuration, a working fluid captured by the filter member and flowing downward can be received by the receiving plate portion, and the working fluid is allowed to flow into the first space. Therefore, a working fluid captured by the filter member and flowing downward can be prevented from being sucked out by the compressor more certainly in this configuration.

In the configuration including the receiving plate portion, the receiving plate portion preferably has the first end portion and the second end portion closer to the suction port than the first end portion, wherein the receiving plate portion is inclined downward from the second end portion to the first end portion. According to this configuration, a working fluid received by the receiving plate portion can be shed from the first end portion which is an end portion away from the suction port. That is, a position to shed a working fluid from the receiving plate portion can be set to be away from the suction port, so that a working fluid which is shed from the receiving plate portion can be prevented from being sucked out by the compressor more certainly, in comparison with the case where a working fluid is shed from the receiving plate portion at a position closer to the suction port.

Moreover, the cooling device according to the present embodiments comprises any one of the aforementioned evaporators, wherein cooling is performed by using evaporation heat obtained when at least part of the droplet or misty working fluid is evaporated.

Since this cooling device is provided with any one of the aforementioned evaporators, an effect of extending service life of the compressor, which is similar to that of the aforementioned evaporators, can be obtained.

## Claims

1. An evaporator (14) comprising:
a housing (22) having a suction port (22d) connectable to a suction portion of a compressor (16) in order to evaporate at least part of a droplet or misty working fluid in the housing (22) by a suction effect of the compressor (16) through the suction port (22d), and
an introduction port (22e) for introducing working fluid into the housing (22) through the introduction port (22e), the housing (22) being configured by a side wall portion (22a) provided with the suction port (22d), a top wall portion (22b) provided with the introduction port (22e) and a bottom wall portion (22c),
wherein a top plate (24) having through holes provided in a portion corresponding to a first space (S3) and a bottom plate (26) are provided in the housing (22), a first storage space (S1) temporarily storing working fluid introduced through the introduction port (22e) is configured between the top plate (24) and the top wall portion (22b), and
a filter (30) installed between the top plate (24) and the bottom plate (26) in the housing (22), the filter (30) dividing a space in the housing (22) into the first space (S3), into which working fluid in the first storage space (S1) is shed through the through holes, for generating the droplet or misty working fluid and a second space (S4) for communicating with the suction port (22d), the filter (30) being inclined away from the suction port (22d) as advancing upward, the filter (30) transmitting therethrough vapor resulting from evaporation of the droplet or misty working fluid while capturing the droplet or misty working fluid,
wherein a second storage space (S2) is configured between the bottom plate (26) and the bottom wall portion (22c) to temporarily store working fluid shed from the first storage space (S1), the stored working fluid in the second storage space (S2) being droplet or misty working fluid shed in the first space (S3) and flowing into the second storage space (S2) and working fluid captured by the filter (30) and flowing into the second storage space (S2), **characterised in that** the housing (22) further comprises an exhaust port (22f) connectable to a pump (10) in order to exhaust working fluid cooled down in the housing (22) by the pump (10) through the exhaust port (22f), wherein the bottom wall portion is provided with the exhaust port (22f), and
the filter (30) is connected to both the top plate (24) and the bottom plate (26).

2. The evaporator (14) according to claim 1, wherein
the filter (30) is divided into filter members (41) disposed in a vertical direction, each of the filter members (41) being inclined away from the suction port (22d) as advancing upward.

3. The evaporator (14) according to claim 2, further comprising;
a receiving plate portion (42a) arranged between two adjacent filter members (41) disposed in the vertical direction, the receiving plate portion (42a) receiving the working fluid captured by an upper filter member (41) thereof and flowing downward; and
an erected portion (42b) erected on the receiving plate portion (42a) at a position closer to the suction port (22d) than the upper filter member.

4. The evaporator (14) according to claim 3, wherein the receiving plate portion (42a) is inclined downward from the second space (S4) to the first space (S3).

5. The evaporator (14) according to claim 2, further comprising;
a receiving plate portion (42a) arranged between two adjacent filter members (41a) disposed in the vertical direction, the receiving plate portion (42a) receiving the working fluid captured by an upper filter member (41a) thereof and flowing downward, wherein
the receiving plate portion (42a) is inclined downward from the second space (S4) to the first space (S3).

6. The evaporator (14) according to any one of claims 3 to 5, wherein; the receiving plate portion (42a) has a first end portion (61a) and a second end portion (61b) closer to the suction port (22d) than the first end portion (61a); and
the receiving plate portion (42a) is inclined downward from the second end portion (61b) to the first end portion (61a).

7. A cooling device, comprising the evaporator according to any one of claims 1 to 6, wherein cooling is performed by using evaporation heat obtained when at least part of the droplet or misty working fluid is evaporated.

## Patentansprüche

1. Verdampfer (14), der Folgendes aufweist:
ein Gehäuse (22) mit einer Sauganschluss (22d), der mit einem Saugabschnitt eines Verdichters (16) verbindbar ist, um zumindest einen Teil eines tropfenförmigen oder nebeligen Arbeitsfluids in dem Gehäuse (22) durch einen Saugeffekt des Verdichters (16) durch den Sauganschluss (22d) zu verdampfen, und einem Einbringungsanschluss (22e) zum Einbringen des Arbeitsfluids in das Gehäuse (22) durch den Einbringungsanschluss (22e), wobei das Gehäuse (22) durch einen Seitenwandabschnitt (22a), der mit dem Sauganschluss (22d) vorgesehen ist, einen oberen Wandabschnitt (22b), der mit dem Einbringungsanschluss (22e) vorgesehen ist, und einen Bodenwandabschnitt (22c) gebildet ist,
wobei eine obere Platte (24), die Durchgangslöcher hat, die in einem Abschnitt korrespondierend zu einem ersten Raum (S3) vorgesehen sind, und eine Bodenplatte (26) in dem Gehäuse (22) vorgesehen sind, wobei ein erster Speicherraum (S1), der das Arbeitsfluid, das durch den Einbringungsanschluss (22e) eingebracht wird, temporär speichert, zwischen der oberen Platte (24) und dem oberen Wandabschnitt (22b) gebildet ist, und
einen Filter (30), der zwischen der oberen Platte (24) und der Bodenplatte (26) in dem Gehäuse (22) eingebaut ist, wobei der Filter (30) einen Raum in dem Gehäuse (22) in den ersten Raum (S3), in den das Arbeitsfluid in dem ersten Speicherraum (S1) durch die Durchgangslöcher vergossen wird, zum Erzeugen des tropfenförmigen oder nebeligen Arbeitsfluids und einen zweiten Raum (S4) zur Verbindung mit dem Sauganschluss (22d) unterteilt, wobei der Filter (30) von dem Sauganschluss (22d) nach oben voranschreitend weg geneigt ist, wobei der Filter (30) einen Dampf hindurch überträgt, der sich aus der Verdampfung des tropfenförmigen oder nebeligen Arbeitsfluids ergibt, während das tropfenförmige oder nebelige Arbeitsfluid eingefangen wird,
wobei ein zweiter Speicherraum (S2) zwischen der Bodenplatte (26) und dem Bodenwandabschnitt (22c) gebildet ist, um das Arbeitsfluid, das von dem ersten Speicherraum (S1) vergossen wird, temporär zu speichern, wobei das gespeicherte Arbeitsfluid in dem zweiten Speicherraum (S2) ein tropfenförmiges oder nebeliges Arbeitsfluid, das in den ersten Raum (S3) eingegossen wird und in den zweiten Speicherraum (S2) strömt, und ein Arbeitsfluid ist, das durch den Filter (30) eingefangen wird und in den zweiten Speicherraum (S2) strömt,
**dadurch gekennzeichnet, dass**
das Gehäuse (22) des Weiteren einen Auslassanschluss (22f) aufweist, der mit einer Pumpe (10) verbindbar ist, um das Arbeitsfluid, das in dem Gehäuse (22) gekühlt wird, durch die Pumpe (10) durch den Auslassanschluss (22f) auszulassen, wobei der Bodenabschnitt mit dem Auslassanschluss (22f) vorgesehen ist, und
der Filter (30) sowohl mit der oberen Platte (24) als auch der Bodenplatte (26) verbunden ist.

2. Verdampfer (14) nach Anspruch 1, wobei
der Filter (30) in Filterbauteile (41) unterteilt ist, die in einer senkrechten Richtung angeordnet sind, wobei jedes Filterbauteil (41) von dem Saugabschnitt (22d) nach oben voranschreitend weg geneigt ist.

3. Verdampfer (14) nach Anspruch 2, der des Weiteren Folgendes aufweist:
einen Aufnahmeplattenabschnitt (42a), der zwischen zwei benachbarten Filterbauteilen (41), die in der senkrechten Richtung angeordnet sind, angeordnet ist, wobei der Aufnahmeplattenabschnitt (42a) das Arbeitsfluid, das durch ein oberes Filterbauteil (41) eingefangen wird und nach unten strömt, aufnimmt; und
einen aufrechten Abschnitt (42b), der an dem Aufnahmeplattenabschnitt (42a) an einer Position aufrecht ist, die näher an dem Sauganschluss (22d) liegt als das obere Filterbauteil.

4. Verdampfer (14) nach Anspruch 3, wobei der Aufnahmeplattenabschnitt (42a) von dem zweiten Raum (S4) zu dem ersten Raum (S3) nach unten geneigt ist.

5. Verdampfer (14) nach Anspruch 2, der des Weiteren Folgendes aufweist:
einen Aufnahmeplattenabschnitt (42a), der zwischen zwei benachbarten Filterbauteilen (41a) angeordnet ist, die in der senkrechten Richtung angeordnet sind, wobei der Aufnahmeplattenabschnitt (42a) das Arbeitsfluid, das durch ein oberes Filterbauteil (41a) eingefangen wird und nach unten strömt, aufnimmt, wobei
der Aufnahmeplattenabschnitt (42a) von dem zweiten Raum (S4) zu dem ersten Raum (S3) nach unten geneigt ist.

6. Verdampfer (14) nach einem der Ansprüche 3 bis 5, wobei:
der Aufnahmeplattenabschnitt (42a) einen ersten Endabschnitt (61a) und einen zweiten Endabschnitt (61b) hat, der näher an dem Sauganschluss (22d) liegt als der erste Endabschnitt (61a); und
der Aufnahmeplattenabschnitt (42a) von dem zweiten Endabschnitt (61b) zu dem ersten Endabschnitt (61a) nach unten geneigt ist.

7. Kühlvorrichtung mit dem Verdampfer nach einem der Ansprüche 1 bis 6, wobei ein Kühlen mittels einer Verdampfungswärme ausgeführt wird, die erhalten wird, wenn zumindest ein Teil des tropfenförmigen oder nebeligen Arbeitsfluids verdampft wird.

## Revendications

1. Evaporateur (14) comprenant :
un boîtier (22) ayant un orifice d'aspiration (22d) pouvant être raccordé à une partie d'aspiration d'un compresseur (16) afin d'évaporer au moins une partie d'un fluide de travail en gouttes ou en brouillard dans le boîtier (22) par un effet d'aspiration du compresseur (16) par l'orifice d'aspiration (22d), et
un orifice d'introduction (22e) pour introduire le fluide de travail dans le boîtier (22) par l'orifice d'introduction (22e), le boîtier (22) étant configuré par une partie de paroi latérale (22a) prévue avec l'orifice d'aspiration (22d), une partie de paroi supérieure (22b) prévue avec l'orifice d'introduction (22e) et une partie de paroi inférieure (22c),
dans lequel une plaque supérieure (24) ayant des trous débouchants prévus dans une partie correspondant à un premier espace (S3) et une plaque inférieure (26) sont prévues dans le boîtier (22), un premier espace de stockage (S1) stockant temporairement le fluide de travail introduit par l'orifice d'introduction (22e) est configuré entre la plaque supérieure (24) et la partie de paroi supérieure (22b), et
un filtre (30) installé entre la plaque supérieure (24) et la plaque inférieure (26) dans le boîtier (22), le filtre (30) divisant un espace dans le boîtier (22) en un premier espace (S3) dans lequel le fluide de travail dans le premier espace de stockage (S1) est versé par les trous débouchants, afin de générer le fluide de travail en gouttes ou en brouillard et en un second espace (S4) pour communiquer avec l'orifice d'aspiration (22d), le filtre (30) étant incliné à distance de l'orifice d'aspiration (22d) lorsqu'il avance vers le haut, le filtre (30) transmettant à travers ce dernier la vapeur résultant de l'évaporation du fluide de travail en gouttes ou en brouillard tout en capturant le fluide de travail en gouttes ou en brouillard,
dans lequel un second espace de stockage (S2) est configuré entre la plaque inférieure (26) et la partie de paroi inférieure (22c) pour stocker temporairement le fluide de travail versé depuis le premier espace de stockage (S1), le fluide de travail stocké dans le second espace de stockage (S2) étant un fluide de travail en gouttes ou en brouillard versé dans le premier espace (S3) et s'écoulant dans le second espace de stockage (S2) et le fluide de travail capturé par le filtre (30) et s'écoulant dans le second espace de travail (S2), **caractérisé en ce que** le boîtier (22) comprend en outre un orifice d'échappement (22f) pouvant être raccordé à une pompe (10) afin d'évacuer le fluide de travail refroidi dans le boîtier (22) par la pompe (10) en passant par l'orifice d'échappement (22f), dans lequel la partie de paroi inférieure est prévue avec l'orifice d'échappement (22f), et
le filtre (30) est raccordé à la fois à la plaque supérieure (24) et à la plaque inférieure (26).

2. Evaporateur (14) selon la revendication 1, dans lequel :
le filtre (30) est divisé en éléments de filtre (41) disposés dans une direction verticale, chacun des éléments de filtre (41) étant incliné à distance de l'orifice d'aspiration (22d) lorsqu'il avance vers le haut.

3. Evaporateur (14) selon la revendication 2, comprenant en outre :
une partie de plaque de réception (42a) agencée entre deux éléments de filtre (41) adjacents, disposés dans la direction verticale, la partie de plaque de réception (42a) recevant le fluide de travail capturé par son élément de filtre supérieur (41) et s'écoulant vers le bas ; et
une partie dressée (42b) dressée sur la partie de plaque de réception (42a) dans une position plus proche de l'orifice d'aspiration (22d) que l'élément de filtre supérieur.

4. Evaporateur (14) selon la revendication 3, dans lequel la partie de plaque de réception (42a) est inclinée vers le bas, du second espace (S4) au premier espace (S3).

5. Evaporateur (14) selon la revendication 2, comprenant en outre :
une partie de plaque de réception (42a) agencée entre deux éléments de filtre (41a) adjacents disposés dans la direction verticale, la partie de plaque de réception (42a) recevant le fluide de travail capturé par son élément de filtre supérieur (41a) et s'écoulant vers le bas, dans lequel :
la partie de plaque de réception (42a) est inclinée vers le bas, du second espace (S4) au premier espace (S3).

6. Evaporateur (14) selon l'une quelconque des revendications 3 à 5, dans lequel :
la partie de plaque de réception (42a) a une première partie d'extrémité (61a) et une seconde partie d'extrémité (61b) plus proche de l'orifice d'aspiration (22d) que la première partie d'extrémité (61a) ; et
la partie de plaque de réception (42a) est inclinée vers le bas à partir de la seconde partie d'extrémité (61b) jusqu'à la première partie d'extrémité (61a).

7. Dispositif de refroidissement comprenant l'évaporateur selon l'une quelconque des revendications 1 à 6, dans lequel le refroidissement est réalisé en utilisant la chaleur d'évaporation obtenue lorsqu'au moins une partie du fluide de travail en gouttes ou en brouillard est évaporée.
